(19) Europäisches Patentamt
European Patent Office
Office européen des brevets

(11) **EP 4 075 316 A1**

(12) **EUROPEAN PATENT APPLICATION**

(43) Date of publication:
**19.10.2022 Bulletin 2022/42**

(21) Application number: **21305488.5**

(22) Date of filing: **14.04.2021**

(51) International Patent Classification (IPC):
**G06F 30/13** (2020.01)     **G06F 30/18** (2020.01)
**G06F 111/04** (2020.01)     **G06F 111/20** (2020.01)

(52) Cooperative Patent Classification (CPC):
**G06F 30/13; G06F 30/18;** G06F 2111/04;
G06F 2111/20

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Dassault Systèmes
78140 Vélizy-Villacoublay (FR)**

(72) Inventors:
• **DURAND, Tom
78946 VELIZY VILLACOUBLAY CEDEX (FR)**

• **MARCUSANU, Ana
78946 VELIZY VILLACOUBLAY CEDEX (FR)**
• **LOUIS, Aurélien
75008 PARIS (FR)**
• **AEPLY, Célia
75008 PARIS (FR)**
• **FARRE, Julie
78946 VELIZY VILLACOUBLAY CEDEX (FR)**

(74) Representative: **Atout PI Laplace
Immeuble "Visium"
22, avenue Aristide Briand
94117 Arcueil Cedex (FR)**

(54) **METHOD FOR AUTOMATICALLY FURNISHING A VIRTUAL 3D ROOM**

(57) The invention relates to a computer-implemented method for automatically providing at least a template of a furnished virtual 3D room comprising 3D elements, comprising, for each furnished virtual 3D room:

a1) automatically extracting a spatial relations graph based on spatial relations between the 3D elements of the 3D room, said 3D elements comprising 3D architectural elements and 3D furnishing objects located in the furnished virtual 3D room;

a2) automatically extracting at least one zone from the 3D room based on the spatial relations graph, and extracting a set of constraints about a relative arrangement of said zone with respect to the room architecture or with respect to other zones of the 3D room, a zone being defined by a local spatial arrangement of at least one 3D furnishing object;

a3) storing a template of the furnished virtual 3D room, said template comprising said zone and said set of constraints.

The invention also relates to a computer-implemented method for automatically furnishing a 3D room, comprising the steps of:

b1) providing a virtual 3D room to be furnished, and selecting a template among the stored templates;

b2) furnishing the virtual 3D room so as to map the selected template into the 3D room to be furnished.

a1)                          a2)                          a3)

Fumished 3D Room(s) → Spatial Relationship Graph(s) Extraction → Zones and Constraints Extraction → Template(s)

**Fig. 1**

EP 4 075 316 A1

**Description**

The invention pertains to the field of computer-aided design of furnished rooms. In particular, the invention relates to a computer-implemented method for automatically providing at least a template of a furnished virtual 3D room. The invention also relates to a computer-implemented method for automatically furnishing a 3D room. The invented method enables a user to automatically furnish a 3D room based on stored templates of furnished rooms.

Consumers who plan to move in in a new apartment, or who simply plan to renovate a room, usually find inspiration from similar projects in furniture stores, or they can also do it by using CAD software. Thus, the consumer projects himself in the new room.

Some existing methods to automatically create templates of indoor rooms are based on classic optimization techniques, and use a set of furniture as input to arrange into a given room. The drawbacks of such approaches is that it implies defining a set of constraints manually (which spaces around each objects should be left free, which objects are to be next to other ones, etc) which takes a considerable amount of time and prone to error.

An example of method based on classic optimization techniques is disclosed in "Automated Interior Design Using a Genetic Algorithm" (Peter Kan et al., Proceedings of VRST2017, Gothenburg, Sweden, November 2017). The optimization process uses a genetic algorithm, which starts from a random solution, so as to automatically populate indoor virtual scenes with furniture objects and optimize their positions and orientations with respect to aesthetic, ergonomic and functional rules. Since the population is initialized by layouts with randomly selected furniture objects from the database, the automatic furnishing of the room can take a long time depending on the complexity of the problem. The furniture constraints are specified by the user as parameters, which may be cumbersome.

Approaches based on deep-learning leverage huge databases of indoor scenes in order to learn how to furnish new rooms automatically, as disclosed for example in "PlanIT: planning and instantiating indoor scenes with relation graph and spatial prior networks" (Wang, K. et al., ACM Trans. Graph., Vol. 38, No. 4, Article 132, July 2019).

However, approaches based on deep-learning simplify the problem by only considering a limited set of object types per room type and a limited complexity in the considered rooms (for example four walls). They propose a very coarse level of furnishing.

Other techniques that rely on graph structures, as disclosed in CN 107240151 A. Some types of relations (vertical relations) are extracted in a 3D room but rely on human intervention to define more complex types of relations between objects (horizontal relations). After this step of constraints definition, an optimization process is initiated by randomly placing all the objects in the room and then running a heuristic optimization algorithm, in this case simulated annealing, to solve the previous defined constraints. This approach still relies on human interaction to define the constraints in the layout and some high-level relations are missing. This can mislead the optimization step and the optimization could take a very long time to find a pleasing result.

Therefore, there is a need for obtaining a computer-implemented method for automatically providing at least a template of a furnished virtual 3D room, which does not request that the user defines the constraints in the layout, and which provides a wide set of furnishing possibilities.

An object of the present invention is a computer-implemented method for automatically providing at least a template of a furnished virtual 3D room comprising 3D elements, comprising, for each furnished virtual 3D room:

> a1) automatically extracting a spatial relations graph based on spatial relations between the 3D elements of the 3D room, said 3D elements comprising 3D architectural elements and 3D furnishing objects located in the furnished virtual 3D room;
> a2) automatically extracting at least one zone from the 3D room based on the spatial relations graph, and extracting a set of constraints about a relative arrangement of said zone with respect to the room architecture or with respect to other zones of the 3D room, a zone being defined by a local spatial arrangement of at least one 3D furnishing object;
> a3) storing a template of the furnished virtual 3D room, said template comprising said zone and said set of constraints.

In a preferred embodiment, the method comprises computing a ratio between the room's 3D furnishing objects total floor occupation area and the room floor area, and implementing steps a1-a3) only if said ratio satisfies a predefined criterion based on a standard deviation of the ratio for a data set of rooms of the same category.

In a preferred embodiment, step a1) comprises:

- obtaining a set of nodes corresponding to the 3D elements,
- extracting vertical and horizontal relations between 3D elements based on distances between said 3D elements.

In a preferred embodiment, the vertical relations are extracted with the following steps, for each node referred to as an anchor:

- computing the volume of the 3D intersection between a potential supported 3D element and the anchor,
- if the volume of the intersection is above a certain proportion of the volume of the supported 3D element, adding a support edge to the node of the anchor with a "contained" tag,
- if not, adding a support edge to the node of the anchor with a distance tag computed based on the distance between the bottom of the supported target and the top face of the anchor only if the 3D element bottom face center is above the bottom face of the anchor.

In a preferred embodiment, the horizontal relations are extracted, for each node referred to as an anchor, by tracing a series of rays starting from the anchor, and computing the intersections with other 3D furnishing objects of the 3D room.

In a preferred embodiment, step a1) comprises detecting 3D furnishing objects called "hubs" having adjacent or proximal edges with several smaller 3D furnishing objects called "spokes" if the spokes have the same category or a functional link than the hubs, the ingoing edge of the spokes node being transferred to the hub node.

In a preferred embodiment step a1) comprises:

- detecting a chain of at least three 3D furnishing objects connected by adjacent or proximal edges and aligned in a same direction;
- tagging the nodes and the edges composing the chain;
- for each edge of the chain, deleting the opposite edge.

In a preferred embodiment, step a1) comprises:

- detecting at least a superstructure in the spatial relations graph, and applying a pruning on edges of the spatial relations graph which do not belong to a superstructure, or
- applying a pruning on edges of the spatial relations graph which have the lowest frequencies of occurrence in a dataset of graphs extracted from a dataset of 3D furnished rooms.

In a preferred embodiment, step a2) comprises creating a zone for each 3D architectural element which has at least one 3D furnishing object in front of said 3D architectural elements, said zone comprising all 3D furnishing objects which are in front of the 3D architectural element with a proximal or adjacent edge.

In a preferred embodiment, a zone is split in several zones if its length along the 3D architectural element is above a certain threshold.

In a preferred embodiment, step a2) comprises:

- sorting, according to the importance of the 3D furnishing object, 3D furnishing objects which have a node in the graph with at least a relation with another 3D object's node and which are not located in a zone along 3D architectural elements, the importance being defined its dimensions, its category and/or the relations the 3D furnishing object is involved in with other 3D furnishing objects;
- creating new zones comprising the most important 3D furnishing objects.

In a preferred embodiment, step a2) comprises:

- detecting if a 3D furnishing object is located in front of two perpendicular 3D architectural elements,
- creating a constraint for the zone having the 3D furnishing object to be positioned in a corner of the room.

In a preferred embodiment, step a2) comprises:

- adding a distance constraint between a zone which is located along a 3D architectural element and a zone in the middle of the room,
- defining potential relative movements of the zone in the middle of the room with respect to the zone along the 3D architectural element so that the relation between the 3D furnishing objects of both zones is maintained in the online step.

In a preferred embodiment, step a2) comprises:

- adding a distance constraint between two zones along a 3D Separator,
- defining potential relative movements of both zones so that the relation between the 3D furnishing objects of both zones is maintained in the online step.

In a preferred embodiment, in step a3), the template comprises a set of one or several zones and spatial and functional constraints between the zones and between the zones and the 3D architectural elements of the room.

The invention also relates to a computer-implemented method for automatically furnishing a 3D room, comprising the steps of:

b1) providing a virtual 3D room to be furnished, and selecting a template among the stored templates obtained with the aforementioned computer-implemented method for automatically providing at least a template;

b2) furnishing the virtual 3D room so as to map the selected template into the 3D room to be furnished.

In a preferred embodiment, step b2) comprises using the Particle Swarm Optimization (PSO) algorithm to map the selected template in the 3D room to furnish.

In a preferred embodiment, step b2) comprises the sub-steps of:

- determining all combinations of couples made by a 3D architectural element of the 3D room to furnish and a zone of the template,
- assigning all combinations as a variable of the particle of a PSO algorithm,
- running the PSO algorithm until a satisfactory solution, which satisfies the constraints, is found.

The invention also relates to a computer program product comprising computer-executable instructions to cause a computer system to carry out the aforementioned method.

The invention also relates to a non-transitory computer-readable data-storage medium containing computer-executable instructions to cause a computer system to carry out the aforementioned method.

The invention also relates to a computer system comprising a processor coupled to a memory, the memory storing computer-executable instructions to cause the computer system to carry out the aforementioned method.

Thus, it is possible to learn (in an implicit way, without the user knowing them and/or expressing them as constraints) safety rules and arrangements adapted to each type of room. For example, for a room associated with a fire risk, a fire extinguisher must be easily accessible, so in terms of spatial relations, no object such as a table or an armchair will be positioned in front of the fire extinguisher. Also, for a kitchen, the hood will be always located above the cooking plate. It is also possible to express physical constraints concerning the accessibility of a window or the width of a passageway allowing a wheelchair to circulate, for handicapped people.

Additional features and advantages of the present invention will become apparent from the subsequent description, taken in conjunction with the accompanying drawings:

- Figure 1 illustrates the invented method for automatically providing at least a template of a furnished virtual 3D room;
- Figure 2 illustrates the spatial relations graph;
- Figure 3 the extraction of spatial relations by using the 2D projections on the floor;
- Figure 4 illustrates zones along 3D architectural elements;
- Figure 5 illustrates zones in the middle of the room;
- Figure 6 illustrates the corner constraint;
- Figure 7 illustrates a part of computer code for the arrangement of figure 6.
- Figure 8 illustrates the distance constraint between zones;
- Figure 9 illustrates the method for automatically furnishing a 3D room;
- Figure 10 illustrates zones and their plausible translations for a given combination in a particle;
- Figure 11 illustrates some results for a given template in a given 3D room;
- Figure 12 and 13 illustrate block diagrams of respective computer systems suitable for carrying out a method according to different embodiments of the invention.

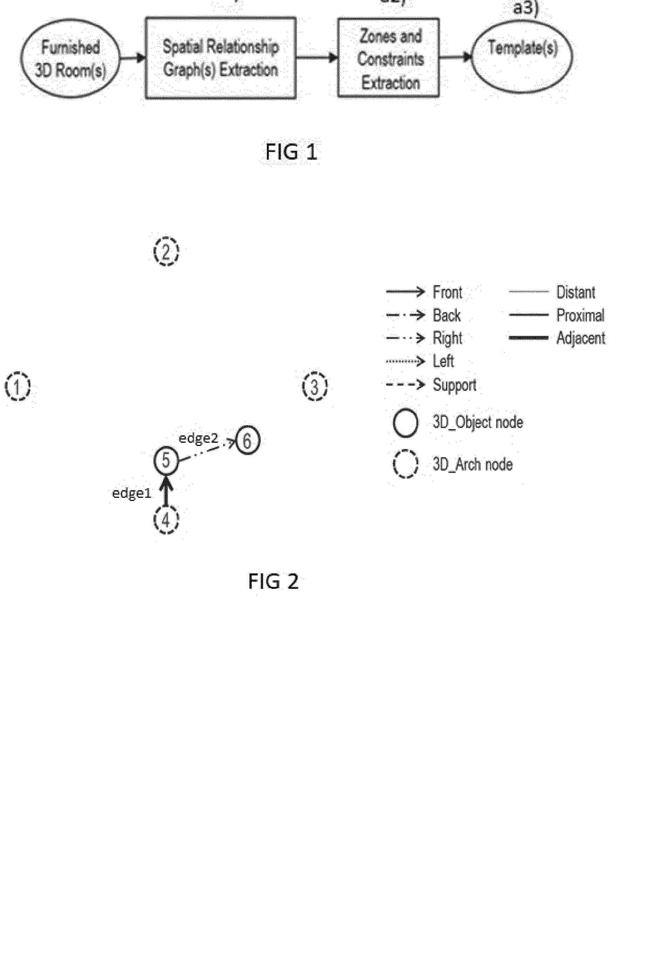

The invention provides a method for automatically extracting templates from a set of one or several furnished 3D rooms, as illustrated by figure 1.

The following definitions are provided for a better understanding of the invention:

3D room: corresponds to a 3D definition of a room, the minimal information required being the set of walls (and their position and dimension).

3D_Objects: 3D furnishing objects which can be furniture or decorative objects to put in the room in order to furnish it. It excludes all architectural objects such as room separators (walls and implicit separators), doors and windows.

3D_Openings: Set of doors and windows of the room.

3D_Separators: Set of room separators (walls and implicit separators).

3D_Archs: 3D architectural elements = 3D_Openings U 3D_Separators.

3D_Elems: 3D_Objects U 3D_Archs.

Furnish: corresponds to the task of furnishing a 3D room, i.e. place one or several 3D_Objects in a room.

Template: set of one or several zones and spatial and functional constraints between the zones and between the zones and the 3D architectural elements of the room.

Zone: a zone defines a local spatial arrangement of the one or several 3D furnishing objects in it with its plausible transformations, the transformations may correspond to one or more: suppression of some of the 3D furnishing objects in the zone, replacement of one or more 3D furnishing objects by one or more 3D furnishing objects in the zone.

The first step of the method consists in automatically extracting a spatial relations graph based on spatial relations between the 3D elements of the 3D room.

The features of the 3D room are available in dedicated databases, and may have initially provided by individuals or by professionals (e.g. furniture retailers, real estate agents, architects); they are defined by at least their 3D architectural elements (3D_Archs):

- Explicit separators (physical separation such as walls),
- Implicit separators (user-defined separation between two areas, with no physical reality),
- Openings (e.g. doors, windows).

Floor, separators and openings are all defined as a 2D polygon within a 3D Plane. The 3D Plane is defined by a 3D point (later called the Origin point) and a normal 3D vector. The 2D Polygon is defined by its vertices, given as 2D points on the Plane relatively to the Origin point which is considered to have (0,0) coordinates on the Plane. The number of vertices depends on the nature of the architectural element. For example: a simple wall with no openings is defined as a polygon with 4 vertices (the 4 wall corners), while a wall with a door has 8 vertices (the 4 wall corners plus the 4 door corners).

The floor Polygon without any openings gives the floor area, and the floor and separators define the volume of the room.

3D furnishing object must have at least the following information (note that 3D architectural elements also have this information):

- Object-related information:

  ∘ One or more category,
  ∘ A 3D bounding box (length, width and height),
  ∘ A 3D model.

- Room-related information:

  ∘ Position of the 3D furnishing object within the 3D room,
  ∘ Orientation of the 3D furnishing object within the 3D room.

3D furnishing objects can have one or more categories with different levels of details, for example a macro-category such as "table" and a finer category such as "coffee table".

Optionally, users can provide for all or some 3D furnishing object they use a list of alternative 3D furnishing objects. These alternative 3D furnishing objects are 3D furnishing objects that could be used in the 3D room instead of the original 3D furnishing object, without changing the functionality of the 3D furnishing object, the functionality of the room, or the general aspect of the room. For example: alternatives to a grey 3-seats couch could still be couches with different colors or slightly different shapes but not tables.

In step a1), the category of the furnished 3D room (bathroom, bedroom, kitchen etc) may be extracted. It can be provided directly by the user or inferred automatically from the set of 3D elements the 3D room contains, as disclosed in "Style-compatible Object Recommendation for Multi-room Indoor Scene Synthesis" (He, Yu, et al., arXiv preprint arXiv: 2003.04187 (2020)).

In a preferred embodiment, a ratio between the room's 3D furnishing objects total floor occupation area and the room floor area is computed, so as to compute the template only if the room is neither too empty nor too cluttered, meaning that there are neither too few nor too many 3D furnishing objects within the room. That contributes to obtaining a clean dataset of templates.

The thresholds for "too few objects" and "too many objects" may depend on the 3D furnishing objects themselves and on the 3D room floor area, and can be defined manually. For example, the 3D furnishing objects should occupy between 20% and 80% of the 3D room floor area.

Alternatively, the thresholds may be learned automatically from a set of 3D rooms (for example: the ratio between the room's 3D furnishing objects total floor occupation area ($\mathrm{sum}_{\mathrm{Room}}$(Object area)) and the room floor area (Room area) is close to the mean of the same ratio over all rooms in the set of 3D rooms of the same category

$$\left(\mathrm{mean}_{\mathrm{Rooms\ set}}\left(\frac{\mathrm{sum}_{\mathrm{Room}}(\mathrm{Object\ area})}{\mathrm{Room\ area}}\right)\right):$$

$$\left|\frac{\mathrm{sum}_{\mathrm{Room}}(\mathrm{Object\ area})}{\mathrm{Room\ area}} - \mathrm{mean}_{\mathrm{Rooms\ set}}\left(\frac{\mathrm{sum}_{\mathrm{Room}}(\mathrm{Object\ area})}{\mathrm{Room\ area}}\right)\right| < \mathrm{threshold},$$ where the threshold can be chosen arbitrarily or related to the selected set of rooms, e.g. the standard deviation of the $\dfrac{\mathrm{sum}_{\mathrm{Room}}(\mathrm{Object\ area})}{\mathrm{Room\ area}}$ over a certain dataset.

Then, the method is implemented only if the ratio satisfies a predefined criterion based on a standard deviation of the ratio for a data set of rooms of the same category.

Then, the relationships between the 3D elements in the 3D room are extracted. For that, step a1) comprises obtaining a set of nodes corresponding to the 3D elements.

The spatial relations graph may be structured as follows:

- A list of nodes, each node corresponds to a 3D element in the room with the following attributes:

  ○ the node ID (index and/or name);
  ○ the category of the 3D element;
  ○ the 3D bounding box of the 3D element (length, width and height);
  ○ the transformation matrix of the 3D element (to obtain the absolute position and orientation in the 3D room of the 3D element);
  ○ the corresponding 3D model for each 3D element;
  ○ the 3D element's macro category (optional);
  ○ the list of ingoing edges;
  ○ the list of outgoing edges;
  ○ parent(s);
  ○ Superstructure tag if any (e.g. "is_hub", "is_spoke", "is_chain"), which will be detailed below.

- A list of edges to represent the relations between the 3D elements in the room with the following attributes:

  ○ An edge ID (index and/or name);
  ○ The ID of the starting node;
  ○ The ID of the ending node;
  ○ A direction (e.g. "front", "back", "left", "right", "support");
  ○ An optional tag (e.g. "contained");
  ○ A functionality (optional);
  ○ A distance tag, for instance:

    ▪ "adjacent" if the minimal distance between the bounding box of the starting node of the edge and the bounding box of the ending node of the edge is less than an "adjacent" threshold (e.g. 5cm);
    ▪ "proximal" if the minimal distance between the bounding box of the starting node of the edge and the bounding box of the ending node of the edge is greater that the "adjacent" threshold and less that another "proximal" threshold (e.g. 50cm);
    ▪ "distant" if the minimal distance between the bounding box of the starting node of the edge and the bounding box of the ending node of the edge is greater that the "proximal" threshold;

  ○ The distance exact value between the bounding box of the starting node of the edge and the bounding box of the ending node;
  ○ Superstructure tag if any (e.g. "is_spoke", "is_chain"), which will be detailed below.

The aforementioned structure is richer than the structures disclosed in the state of the art, since it contains more attributes. It helps to better describe the scenes and have a finer representation.

Figure 2 illustrates an example of a graph which has been extracted with the aforementioned features, with the corresponding legend (type of node, orientation, distance tag, support).

```
node5": {
- "category": "Double beds",
- "macro-category": "bed",
- "transformation_matrix": [0, 1, 0, 0, -1, 0, 0, 0, 0, 0, 1, 0, -
    13302.5, -5203.2, 455.0, 1],
- "bounding_box": [2000, 1800, 1000],
- "ingoing_edges": [edge1],
- "outgoing_edges": [edge2],
- "parents": ["floor", "default"],
- "superstructure_tags": []
}
"edge2": {
- "starting_node": "node5",
- "ending_node": "node6",
- "direction": "Right",
- "optional_tag": "normal",
- "distance_tag": "Proximal",
- "distance_value": 25, #mm
- "superstructure_tag": []
}
```

Then, the relations between 3D elements, i.e. spatial vertical and horizontal relations, are extracted.

Concerning, the vertical relations, the following steps are implemented:

Firstly, for each 3D furnishing object of the room, which is defined as an anchor, it is checked whether the bottom face center of other 3D furnishing object of the 3D room (defined as the targets), are contained in the top-down 2D projected bounding box and that the target's bottom face is above the bottom face of the anchor. If so, the target is added to a set of potential supported 3D furnishing objects for the current anchor.

Secondly, for all the targets in the set of potential supported 3D furnishing objects for the anchor, the volume of the 3D intersection between the potential supported 3D element and the anchor is computed. If the volume of the intersection is above a certain percent of the volume of the supported 3D element (e.g 90%), a support edge is added to the node of the anchor, with a "contained" tag. If not, a support edge is added to the node of the anchor with a distance tag computed w.r.t the distance between the bottom of the supported target and the top face of the anchor only if the 3D element bottom face center is above the bottom face of the anchor.

Lastly, once all the support edges are computed the support edges are pruned in order to keep only one incoming edge for each 3D element. Only the edge with the smallest signed distance for each 3D element is kept.

Unlike the known methods of automatic furnishing, the invented method handles objects contained that are fully or almost fully contained in other objects. When such a case is detected, the contained object is linked to the containing object by a relation with the tag "contained" and is discarded from any other spatial relationship with other objects of the room. In this way, the most meaningful relation is kept, and disturbances due to discarding the other relations are avoided.

Each node may also have a "parent" attribute, in order to assign a horizontal link between some of the 3D elements of the 3D room, i.e. not all the 3D elements of the room, which reduces the complexity of the graph.

Several cases are possible:

- If the 3D furnishing object is supported by another 3D furnishing object and their distance tag corresponds to a distance inferior to a certain threshold ("adjacent") then its parent is the supporting 3D furnishing object;
- If the 3D furnishing object top face's corresponds to the ceiling height w.r.t a certain threshold (e.g. 15 cm) and its bottom face elevation is above the floor w.r.t a certain threshold (e.g. 100 cm) then its parent is "ceiling";
- If the 3D furnishing object top face's elevation is inferior to a certain threshold (e.g. 15 cm) from the floor level then its parent is "floor";
- If the 3D furnishing object is a 3D_Opening (a door or a window), then its parents are "floor" and "arch" and "default";
- If the 3D furnishing object doesn't belong to any of the above cases, the "floor" and "default" are assigned as its default parents.

Then, the spatial horizontal relations between 3D elements, are extracted, with the following steps:

Firstly, for each 3D element in the room, called the anchor, a list of valid targets is computed, i.e. a list of 3D elements that can be related to the anchor 3D element. Some of the following criteria may be used to decide if a 3D element is valid w.r.t to the defined anchor:

- If the anchor has another 3D furnishing object as parent, then the target should have the same parent;
- If the only target's parent is "ceiling", then the anchor should have the "ceiling" parent in its list of parent(s);
- If the only anchor's parent is "ceiling", then the target should have the "ceiling" parent in its list of parent(s);
- the target 3D element must not have an incoming support edge coming from the anchor.

Secondly, the 2D projections on the floor of the anchor and the valid targets to find the horizontal relations are used, as illustrated by figure 3: the rays RAY come from a side of the object and intersect with targets TGT. Rays RAY are projected from each side of the anchor object OBJ, i.e. a set of straight lines regularly distributed along each side edge (e.g. every 5cm with a minimal number of 3 lines per edge) of the anchor OBJ that start from the center cross-section and travels across the room space in the perpendicular direction of the side edge of the anchor.

The intersections between these rays RAY and other 3D elements in the room are collected. To account for visibility, a list of closest intersections per ray from the anchor object OBJ (minimal signed distance w.r.t the edge the rays originate from) is stored, based on the list of parents of the anchor. The closest intersection(s) per group of targets with respect to an epsilon parameter is stored. The epsilon parameter corresponds to a distance (e.g. 50 mm). This distance is used to keep all intersections comprised within the range [dist_closest_intersection, dist_closest_intersection + epsilon]. This allows a better extraction and avoids missing important relations for the statistics. It provides a more stable graph extraction, especially when unexperienced users furnish the room.

For instance, we may consider that a user places a mural television on a wall with a frame of the same dimension above it, the frame being just thicker than the television (e.g. 3cm). In this case, all the relations for the TV (e.g. sofa to TV) would be missing, and possibly alter the statistics. This is particularly also useful when considering discarded objects. In figure 3, if both objects are discarded, the bottom object TGT2 will not be linked to the anchor object OBJ, making it linked to another object that may have less meaning (e.g. bigger distance).

Then the objects are filtered based on their relative distance from the anchor and their group: (we denote d(inter) the distance between the anchor's bounding box and the considered intersection), for example with the following filtering rules:

| Complete list of parents of the anchor | List of groups of targets delimited by ";". A target is in a subgroup delimited by "()" if it has the exact same list of parents as specified for the subgroup. | Filtering rule | Example |
|---|---|---|---|
| object" | [("object")] | / | An anchor object that is supported by a table can only have outgoing edges with the other objects on the table. |
| floor" | [("floor"); ("floor", "defau lt")] | Suppress the intersection for ("floor") if d (inter_floor) > d (inter_floor_ default) Suppress (("floor", "defau lt")) | An anchor rug can only have outgoing edges with other rugs if those rugs are closer to all the other common objects in the considered direction. |
| ceiling" | [("ceiling")] | / | Ceiling lamps can only have outgoing edges with the other ceiling lamps. |

(continued)

| Complete list of parents of the anchor | List of groups of targets delimited by ";". A target is in a subgroup delimited by "()" if it has the exact same list of parents as specified for the subgroup. | Filtering rule | Example |
|---|---|---|---|
| floor", "default" | [("floor"); ("floor", "defau lt")] | Suppress the intersection for ("floor") if d (inter_floor) > d (inter_floor_ default) | An anchor sofa can only have outgoing edges with the other objects of the room. If a table is on a rug in front of it, it will have outgoing edges with both but not with the objects possibly located on the table. |
| floor", "default", "arch" | [("floor"); ("floor", "default")U ("floor", "default", "arch")] | Suppress the intersection for ("floor") if d (inter_floor) > d (inter_floor_ default_ | An anchor door can have outgoing edges with the common objects and other doors and windows of the room. |
| floor", "default", "arch", "ceiling" | [("floor"); ("ceiling"); ("floor", "default")U("floor", "default", "arch") U("floor", "default", "arch", "ceiling")] | Suppress the intersection for ("floor") if d (inter_floor) > d (inter_floor_ default_ | An anchor wall can have outgoing edges with the common objects, openings and other walls of the room. |

The anchor object OBJ of each ray RAY is stored along with the direction of the ray RAY, the target ID and the distance at which is located this target TGT1, TGT2).

An edge per corresponding direction is created in the spatial relations graph between the anchor and each 3D element for which there is a sufficient number of intersected rays (e.g. 2 rays). Distance tag and exact distance value are computed based on the closest intersection between the anchor and the target with respect to the direction.

If several edges from starting node i and ending node j are detected (i.e. several plausible relations), only the one that has the most visibility, in terms of rays it intersects with, will be kept. If several directions have the same amount of visibility, the direction that has the closest intersection between the anchor and the target is chosen. If the intersection distance is equal, then an arbitrary ordering of direction importance is used (e.g. "front", "back", "right", "left").

In a preferred embodiment, the extraction of a spatial relations graph comprises detecting special patterns called superstructures in the spatial relations graph. Some example extractions of those patterns, namely "hubs and spokes" and "chains" are detailed below. Other types of superstructure could be found by looking at the relations in the spatial relation graphs extracted from a large enough database (e.g. hundreds of projects per room type) and retaining the groups of most frequent ones. For instance, three objects categories or more linked in the same way, i.e. with the same edges in several projects in a number of projects $Np$ sufficient so that $Np/Number\_Of\_Projects$ is superior to a certain threshold t (e.g. 0.2) could be considered as a potential superstructure to retain. Note that superstructures could also correspond to a group of one or several functional relations between objects so they represent a functional arrangement of furnitures (e.g. water supply with dishwasher, sink and gas stove in kitchens). In this case, we may consider superstructures that are pre-defined per room type.

The skilled person may refer to the definition of a superstructure and to the detection of superstructures, provided in Annex A.1 of "PlanIT: planning and instantiating indoor scenes with relation graph and spatial prior networks" (Wang, K. et al., ACM Trans. Graph., Vol. 38, No. 4, Article 132, July 2019), and which is incorporated by reference.

In a preferred embodiment, the extraction of a spatial relations graph comprises detecting 3D furnishing objects called "hubs" having adjacent or proximal edges with several smaller 3D furnishing objects called "spokes".

The spokes have the same category (or macro category, depending on the level of detail of the category) (e.g. bed and nightstands) than the hub, or a functional link with the hub that could be useful for the room description (e.g. a fireplace with surrounding armchairs or a small table with chairs around).

Statistics on the dataset of graphs extracted can be used to detect the most frequently occurring hubs structures (in terms of categories involved for instance) and to keep only the most relevant ones.

The hub and spokes nodes may be tagged with "is_hub" and "is_spoke" tags and the edges between the hub and its spokes are also tagged with an "is_spoke" flag.

Once such a structure has been detected, the hub node inherits the incoming edges of the spokes (with an update on the distance tag and value of the edge w.r.t. to the hub and not the spoke), i.e. the ingoing edges of the spokes are transferred to the hub node. The spokes keep only their relations from the hub node and adjacent relations.

In another preferred embodiment of step a1), a chain (or sequence) of at least three 3D furnishing objects connected by adjacent or proximal edges and aligned in a same direction is detected. The alignment may result from a functional link between the 3D furnishing objects (e.g. chains of cabinets or shelves), or for a decorative purpose (e.g. chains of frames or plants). The chain is considered as a "superstructure".

Depending on the level of precision needed, the chain can be filtered to accept only chains of same-category 3D furnishing objects, or only 3D furnishing objects of similar sizes, or require that the 3D furnishing objects are precisely aligned (by checking a collinearity criterion for instance).

Each edge may be involved only in one chain. In order to achieve this, if an edge is involved in several chains, only the longest chain is kept. If there is a tie, a rule of priority may be used on directions to decide which one is kept. This prevents having the same chain in opposite directions.

The nodes and the edges composing the chains are tagged, for example with an "is_chain" tag. For each edge of the chain, the opposite edge, if it exists, is deleted.

Therefore, statistics on the dataset of graphs extracted can be used to detect the most frequently occurring chains structures (in terms of categories involved for instance) and to keep only the most relevant ones.

The graph obtained so far may be very dense with all the spatial relations in the room. Thus, in step a1), a pruning on edges of the spatial relations graph may be applied. A superstructure is detected, then the pruned edges are the ones which do not belong to the detected superstructure. Alternatively, the pruned edges are the ones which have the lowest frequencies of occurrence in a dataset of graphs extracted from a dataset of 3D furnished rooms. In order to keep only the most meaningful relations, and to avoid having too many constraints, some of the edges created in the previous steps are deleted, by implementing the following steps:
Firstly, a version of the previously obtained graph is stored.

Secondly, any 3D_Separator (room separator, i.e. walls and implicit separators), or any "distant" outgoing edges towards non-3D_Separator 3D elements are suppressed.

Thirdly, the statistics computed on the dataset of graphs extracted from a dataset of 3D furnished rooms are used to determine which relations (edges) have the highest frequencies of occurrence. For each distance category, a threshold for the occurrence frequency (number of appearances of the edge over the number of projects containing the 2 involved objects for a given room type) is determined in order to define which relations are to be kept or not in the considered graph (e.g. threshold adjacent is 0.03, threshold proximal is 0.1, threshold distant is 0.3). Optional information about the 3D elements' symmetries can be used here in order to obtain more relevant statistics.

This statistic-based pruning may be applied on a subset of the edges defined by the following rules:

- The edge does not belong to a superstructure as defined above;
- The edge defines a horizontal relation;
- The edge does not have both starting and ending nodes being 3D architectural elements;
- The edge does not define an adjacent relation with the starting node being a 3D architectural element;
- The edge does not define a front non-distant relation between 3D elements that have meaningful front faces (e.g. based on their symmetries and/or category). This can be extended to distant relations supposing that a careful meaningful front faces definition (e.g. per couple of categories) is stored;
- The edge does not define an adjacent relation between two 3D furnishing objects of the same category.

The two last conditions are useful when the statistics are not representative enough of the variety of plausible 3D furnished rooms.

Lastly, it is checked whether the pruned graph is still connected. If one or more nodes are disconnected, the shortest path to the nodes that have been disconnected is searched in the graph which has been previously stored (using Dijkstra's algorithm for instance). Edge types and distances are used to assign weights to each path (e.g. adjacent relation has a weight of 1+edge_distance/1000, proximal of 2.1+edge_distance/1000, distant of 3.2+edge_distance/1000). The edges are restored in those shortest paths, which had been deleted by the statistical pruning. If no edges are found to reconnect the unconnected node, the incoming edge from a 3D Separator that has the smallest distance to the node's 3D furnishing objects is determined, and added to the graph.

This process allows keeping only the relations/edges that have a meaning regarding the arrangement of the 3D elements in the room.

It can be noted that, in step a1) of automatically extracting a spatial relations graph, if some of the 3D furnishing objects are not of interest (i.e. discarded), horizontal edges may not be extracted for them with the other 3D furnishing objects (except for the "support" relation) but only incoming edges from the non-discarded 3D furnishing objects (only considering them as a set of other targets that have an independent extraction). This can be useful for decorative accessories (detected based on their category) in order to simplify the graph extraction step. In that case, only the closest incoming edge(s) per discarded 3D furnishing objects are kept.

The next step (step a2), figure 1) of the method for automatically providing a template comprises automatically extracting zones from the 3D room, based on the spatial relations graph.

A zone defines a local spatial arrangement for each 3D architectural element which has at least one 3D furnishing object in front of said 3D architectural element, with a proximal or adjacent edge in the graph. Adjacent 3D furnishing object linked to the 3D furnishing object are recursively added in the zone.

A zone may be split in several zones if its length is above a certain threshold (e.g. 5 meters). This split can occur between groups of 3D furnishing objects that do not have any adjacent relations between them. This embodiment prevents the method from dealing with very large zones (in term of length).

If a 3D furnishing object is front of two 3D architectural elements, the 3D architectural element, whose line (using projection on floor) is the most aligned with the 3D furnishing object's back, is detected.

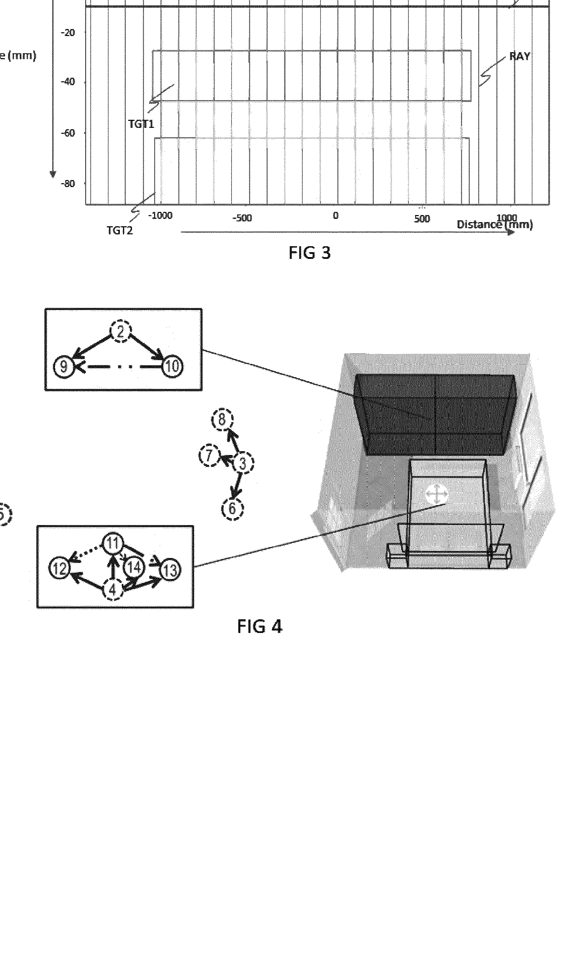

Figure 4 illustrates an example of zone extraction (right part of the figure) based on the graph (left part of the figure). Both cabinets and the wall which is behind the cabinets represent a first zone. The bed, the painting, both night tables and the wall to which the painting is hanging represent a second zone.

It may arise that a 3D furnishing object does not belong to any zone in the graph, which means that there is no edge between the 3D furnishing object and a 3D architectural element. In that case, all 3D furnishing object nodes which have at least a relation with another 3D furnishing object nodes and not in a zone along a 3D architectural element (3D separator) are kept. Then, this list is sorted by importance of the 3D furnishing object. This importance can be defined with regard to its dimensions, its category and/or the relations the 3D furnishing object is involved in with other 3D furnishing objects:

$$\text{Importance(obj)} = \left(\text{obj}_{\text{width}} * \text{obj}_{\text{length}} + \text{nbObjEdges}\right) * \text{g}\left(\text{obj}_{\text{category}}\right)$$

With $\text{obj}_{\text{width}} * \text{obj}_{\text{length}}$ in mxm, nbObjEdges being the sum of incoming edges starting or ending from the 3D furnishing object obj and $\text{g}(\text{obj}_{\text{category}})$ a function mapping a category to a certain prior about its importance in the spatial arrangement of the room (e.g. obtained from a relative frequency of appearance for a given object category in a given room type).

Then, the following steps are performed, until there is no 3D furnishing object left that does not belong to any zone:

- 1. Take the first 3D furnishing object in the previously sorted list of remaining 3D furnishing objects and define a new zone;
- 2. Recursively add 3D furnishing objects from the list that have "adjacent" or "proximal" edges with the 3D furnishing object in the new zone until there is no more 3D furnishing object to add;
- 3. Go back to step 1 to define a new zone starting from another 3D furnishing object.

Such method could lead to quite large zones in terms of both dimension and number of elements. If such behavior is observed, the aforementioned procedure could be performed by only considering adjacent relationships for grouping (instead of adjacent and proximal).

Figure 5 illustrates the creation of new zones in the middle of the room. In the 3D view of the room, on the left side, the carpets, the table the chair and the ceiling light do not belong to any zone in the graph (nodes 11-15). Thanks to the aforementioned method, a new zone is created, as illustrated by the frame which surrounds the nodes 11-15. It has been established that the carpet 12 is an outgoing edge of the sofa 9. Similarly, on the right side, the table, the chairs and the ceiling light do not belong to any zone in the graph (nodes 18-22) extraction. A new zone is created, as illustrated by the frame which surrounds the nodes 18-22. It has been established that the table 18 is an outgoing edge of the wall 5.

Some zones can be tagged as optional and sorted by priority. Defining an optional zone means that a solution that proposes a furnishing originated from this 3D room without containing the 3D furnishing objects of this optional zone will still be considered as valid. It is useful since some 3D room architectures may not have the properties needed (e.g. surface) to place all the zones of the inspiration. Below a list of criteria to define whether a zone is optional:

- the zone does not contain any "hubs" and "spokes" 3D furnishing objects;
- the zone has a limited occupancy (e.g. floor area < 1m$^2$);
- the zone does not contain 3D furnishing objects of high importance for the given room type, especially in terms of functionality (e.g. baby bed for a nursery).

To sort the zones, a priority function may be defined:

$$\text{priority}(\text{zone}) = \sum_{\text{obj}\in\text{zone}} \text{obj}_{\text{surface}} \times \text{obj}_{\text{importance}} \times \text{obj}_{\text{super}}$$

With $\text{obj}_{\text{surface}}$ the surface of the objects in the zone, $\text{obj}_{\text{importance}}$ the importance of the object in the zone w.r.t. the room type and $\text{obj}_{\text{super}}$ a coefficient > 1 if the object belongs to a superstructure and < 1 if it does not, depending on the superstructure importance (e.g. frequency of appearance).

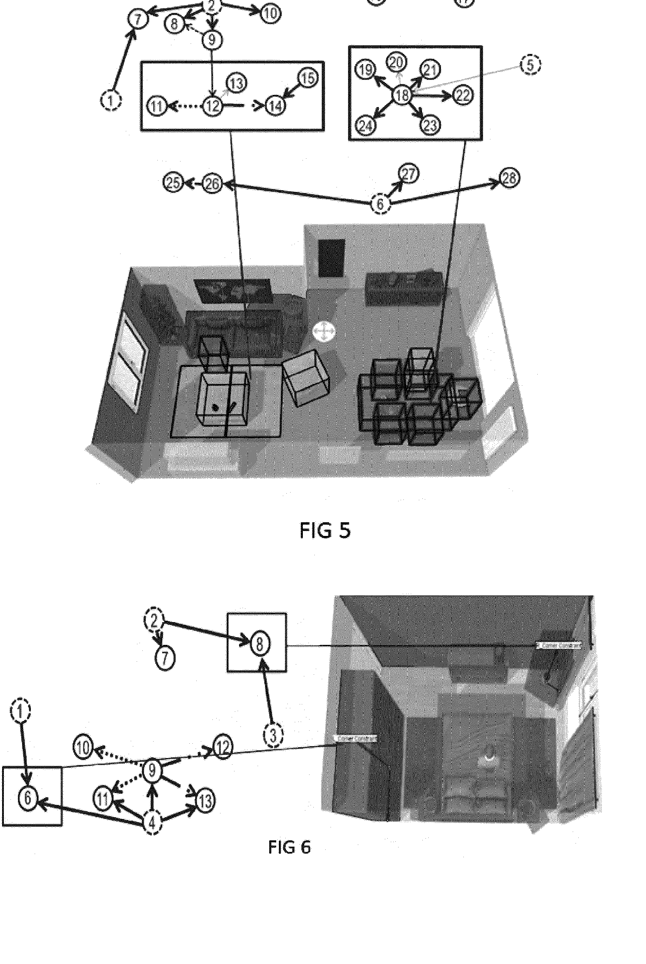

In a preferred embodiment, as illustrated by figure 6, the step a2) may include detecting if a 3D furnishing object is located in front of two perpendicular 3D architectural elements, and creating a constraint for the zone having the 3D furnishing object to be positioned in a corner of the room.

The corner constraint can be defined as left or right. If right, the zone will be placed along its 3D separator reference, so its 3D furnishing object placed at its left extremity (the one that was placed in the corner in the template) will be in front (i.e. next to) of another wall on the right (if we look at it placed in a referential point facing the front face of the reference 3D Separator). This is the case for example in figure 6, for the cabinet (node 6), which is located in front of walls 1 and 4. The corner constraint is defined as right. On the contrary, for the plant 8, which is located in front of wall 2 and 3, the constraint is defined as left.

Figure 7 illustrates a part of computer code for the arrangement of figure 6.

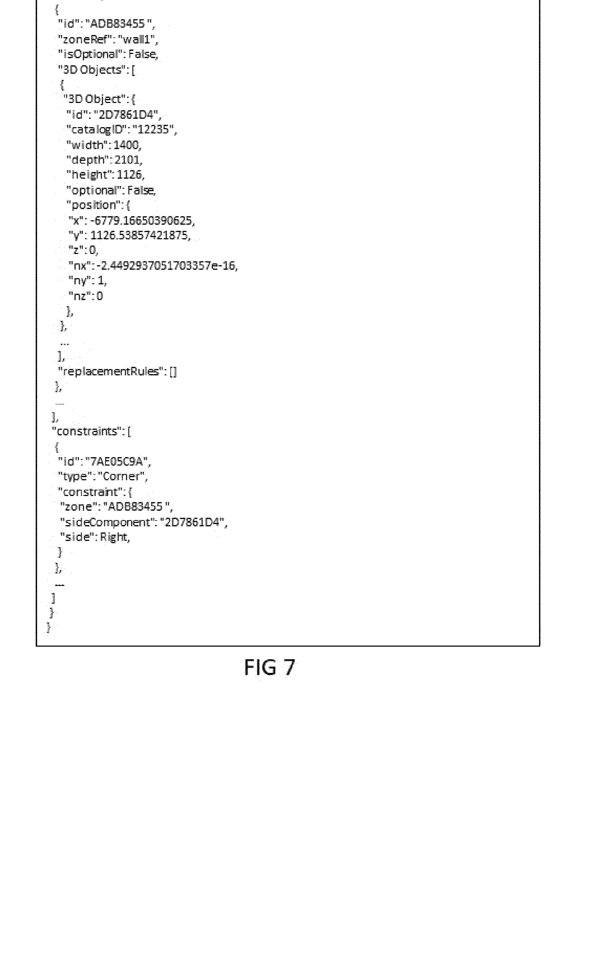

In another embodiment, a hard parametric constraint between the zones along a 3D architectural element and those in the middle of the room may be added so as to keep the furnishing structure of the room, as illustrated by figure 8. Therefore, regulatory constraints relative to an easy access for people with reduced mobility may be taken into account, for example minimal distances between zones.

Each zone in the middle of the room is linked to one zone along a 3D architectural element (3D Separator) by searching edge(s) between 3D furnishing objects in the zone in the middle of the room and 3D furnishing objects in the other zones. If there is no direct edge between the zone in the middle of the room and a zone along a 3D architectural element, the zone in the middle is linked to another zone in the middle of the room that will be itself linked (directly or not) to a zone along a 3D architectural element.

If several edges are found, the "front" directions are favored and then the minimal edge distance value. If there is no "front" direction, the edge that had the highest frequency in the database statistics mentioned above is considered, the edge with the minimal distance value is kept, independently of its direction.

Then, potential relative placements (i.e. translations) of the zone in the middle of the room w.r.t the zone along 3D architectural element are defined, so that so that the relation between the 3D furnishing objects of both zones is maintained in the step of automatic furnishing of a 3D room.

The same approach can be made with two zones which share a common 3D architectural element. If an edge exists between the 3D furnishing objects of two zones, a potential relative placements is defined, (i.e. translations), so that the proposal(s) will respect the relation between the 3D furnishing objects of both zones.

Weak constraints may also be added on relations between an opening (door, window) and 3D furnishing objects in order to set 3D furnishing objects in the new room in front of window or door accordingly. Therefore, the constraints remain even if the 3D furnishing object is replaced by another one.

Then, in the last step of the claimed method, the template of the furnished virtual 3D room is stored (step a3), fig. 1). The template may be provided to a system for automatically furnishing a 3D room. Advantageously, a template comprises a set of one or several zones and spatial and functional constraints (chain, support, hubs, corner constraints etc.) between the zones and between the zones and the 3D architectural elements of the room.

The invention also relates to a computer-implemented method for automatically furnishing a 3D room, comprising the steps of:

b1) providing a virtual 3D room to be furnished, and selecting a template among the stored templates obtained with the computer-implemented method for automatically providing at least a template according to any of the preceding claims;

b2) furnishing the virtual 3D room so as to map the selected template into the 3D room to be furnished.

Figure 9 illustrates the different steps of the invented method. A 3D room to furnish is provided by the user. The template can be selected by the user (e.g. on a website or a dedicated software, with a panel selection based on a rendering of the template in its original room) or automatically proposed (e.g. the most liked template on the platform).

An additional filtering may be implemented, so as to only propose templates that correspond to the type of the 3D room to furnish (e.g. the template which corresponds to a 30 m$^2$ bedroom as inspiration will not be proposed for a

12 m$^2$ bedroom to furnish).

In a preferred embodiment, step b2) comprises using the Particle Swarm Optimization (PSO) algorithm to map the selected template in the 3D room to furnish.

It is reminded that the PSO algorithm optimizes a problem by iteratively trying to improve a candidate solution with regard to a given measure of quality. It solves a problem by having a population of candidate solutions, here dubbed particles, and moving these particles around in the search-space of the particle's position and velocity. Each particle's movement is influenced by its local best-known position; it is also guided toward the best-known positions in the search-space and by its own velocity.

The PSO algorithm applied to furnishing a 3D room based on templates consists in finding optimum placement(s) of a set of 3D furnishing objects in a given room with constraints such as: non collision, 3D furnishing objects in a corner of a 3D architecture element, or distance between two groups.

Given a certain 3D room to furnish and the inspiration template with its set of zones and its constraints between zones and 3D architecture elements or functional elements (e.g. plausible water supply), the following steps may be applied:

- Determine all combinations of couples made by a 3D architectural element of the 3D room to furnish and a zone of the selected template. The 3D architectural element in the 3D room to furnish which is coupled with a zone of the template is called the reference 3D architectural element for this zone,
- Assign all combinations as a variable of the particle of the PSO algorithm. The zones' positions w.r.t to their reference 3D architectural element may be added to the variables of the particle, as well as the tag "optional" of the zone and the set of potential replacements of the 3D furnishing objects in each zone.
- The PSO algorithm:

  ○ moves the zones along their reference 3D architectural element (cf. figure 10 which illustrates potential translations for a given combination in a particle);
  ∘ changes the reference 3D architectural element;
  ∘ modifies the set of 3D furnishing objects in the zones (replacement, optional, decorative, etc);
  ∘ avoids colliding with other zones or obstacles (the obstacles are the other 3D architectural elements, spaces in front of 3D Openings, stairs and fixed 3D furnishing objects).

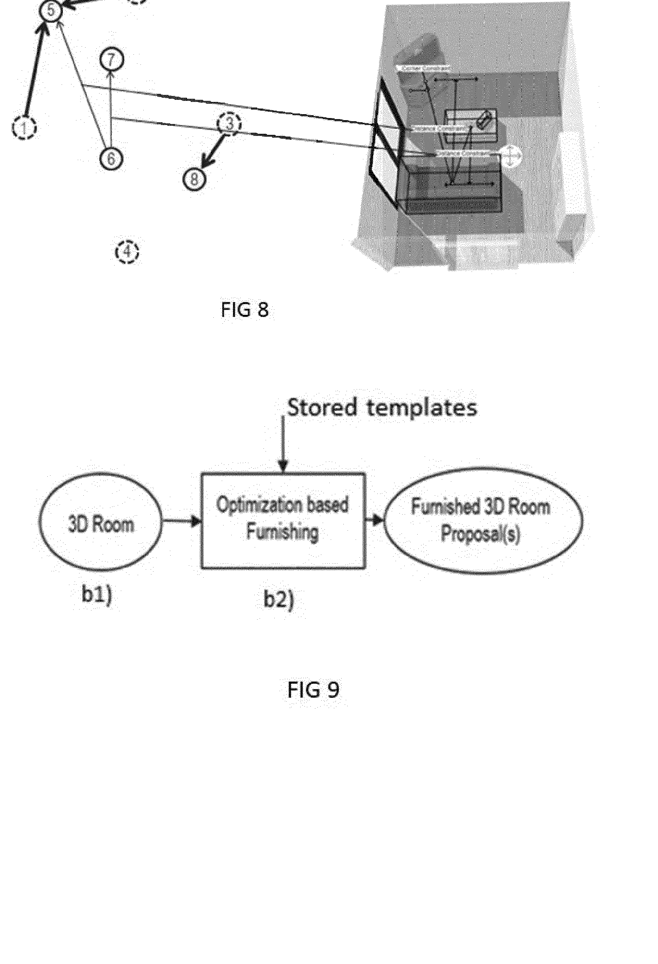

Then, the furnished 3D room proposal(s) may be displayed to the user, as illustrated by figure 11.

The inventive method can be performed by a suitably-programmed general-purpose computer or computer system, possibly including a computer network, storing a suitable program in non-volatile form on a computer-readable medium such as a hard disk, a solid state disk or a CD-ROM and executing said program using its microprocessor(s) and memory.

The method for automatically providing at least a template of a furnished virtual 3D room and the method for automatically furnishing a 3D room may be performed on the same computer system. Alternatively, the method for automatically providing at least a template of a furnished virtual 3D room may be performed on a first computer system, and the method for automatically furnishing a 3D room may be performed on a second computer system. In that case, the computer system may call the templates which are stored on the first computer system.

A computer suitable for carrying out a method according to an exemplary embodiment of the present invention is described with reference to figure 12. In figure 12, the computer includes a Central Processing Unit (CPU) P which performs the method step described above while running an executable program, i.e. a set of computer-readable instructions, stored in a memory device such as RAM MEM1 or ROM MEM2 or hard disk drive (HDD) MEM3, DVD/CD drive MEM4, or stored remotely. Moreover, one or more computer files defining the concrete-reinforcing bars may also be stored on one or more of memory devices MEM1 to MEM4, or remotely.

The templates may be stored in one of the memory devices, as well as the furnished 3D room proposal(s).

The claimed invention is not limited by the form of the computer-readable media on which the computer-readable instructions of the inventive process are stored. For example, the instructions and files can be stored on CDs, DVDs, in FLASH memory, RAM, ROM, PROM, EPROM, EEPROM, hard disk or any other information processing device with which the computer communicates, such as a server or computer. The program can be stored on a same memory device or on different memory devices.

Further, a computer program suitable for carrying out the inventive method can be provided as a utility application, background daemon, or component of an operating system, or combination thereof, executing in conjunction with CPU CP and an operating system such as Microsoft VISTA, Microsoft Windows 8, UNIX, Solaris, LINUX, Apple MAC-OS and other systems known to those skilled in the art.

CPU P can be a Xenon processor from Intel of America or an Opteron processor from AMD of America, or can be other processor types, such as a Freescale ColdFire, IMX, or ARM processor from Freescale Corporation of America.

Alternatively, the CPU can be a processor such as a Core2 Duo from Intel Corporation of America, or can be implemented on an FPGA, ASIC, PLD or using discrete logic circuits, as one of ordinary skill in the art would recognize. Further, the CPU can be implemented as multiple processors cooperatively working to perform the computer-readable instructions of the inventive processes described above.

The computer CPT in figure 12 also includes a network interface NI, such as an Intel Ethernet PRO network interface card from Intel Corporation of America, for interfacing with a network, such as a local area network (LAN), wide area network (WAN), the Internet and the like. The method may be implemented remotely, by means of a web application.

The computer further includes a display controller DC, such as a NVIDIA GeForce GTX graphics adaptor from NVIDIA Corporation of America for interfacing with display DY, such as a Hewlett Packard HPL2445w LCD monitor. A general purpose I/O interface IF interfaces with a keyboard KB and pointing device PD, such as a roller ball, mouse, touchpad and the like. The display, the keyboard, the sensitive surface for the touch mode and the pointing device, together with the display controller and the I/O interfaces, form a graphical user interface, used by the user to provide input commands.

Disk controller DKC connects HDD MEM3 and DVD/CD MEM4 with communication bus CBS, which can be an ISA, EISA, VESA, PCI, or similar, for interconnecting all of the components of the computer.

A description of the general features and functionality of the display, keyboard, pointing device, as well as the display controller, disk controller, network interface and I/O interface is omitted herein for brevity as these features are known.

Figure 13 is a block diagram of a computer system suitable for carrying out the method for automatically providing at least a template of a furnished virtual 3D room, and/or the method for automatically furnishing a 3D room.

The computer systems can be installed at the furniture store or be made up of individual customer PCs directly connected via the Internet to a server.

In figure 13, the executable program and the computer files comprising the templates and the furnished rooms are stored on memory devices DB connected to a server SC. The memory devices and the overall architecture of the server may be the same as discussed above with reference to figure 11, except that display controller, sensitive surface, display, keyboard and/or pointing device may be missing in the server.

The server SC is then connected to an administrator system ADS and end user computer EUC via a network NW.

## Claims

1. A computer-implemented method for automatically providing at least a template of a furnished virtual 3D room comprising 3D elements, comprising, for each furnished virtual 3D room:

   a1) automatically extracting a spatial relations graph based on spatial relations between the 3D elements of the 3D room, said 3D elements comprising 3D architectural elements and 3D furnishing objects located in the furnished virtual 3D room;
   a2) automatically extracting at least one zone from the 3D room based on the spatial relations graph, and extracting a set of constraints about a relative arrangement of said zone with respect to the room architecture or with respect to other zones of the 3D room, a zone being defined by a local spatial arrangement of at least one 3D furnishing object;
   a3) storing a template of the furnished virtual 3D room, said template comprising said zone and said set of constraints.

2. The method according to claim 1, comprising computing a ratio between the room's 3D furnishing objects total floor occupation area and the room floor area, and implementing steps a1-a3) only if said ratio satisfies a predefined criterion based on a standard deviation of the ratio for a data set of rooms of the same category.

3. The method according to any of the preceding claims, wherein step a1) comprises:

   - obtaining a set of nodes corresponding to the 3D elements,
   - extracting vertical and horizontal relations between 3D elements based on distances between said 3D elements.

4. The method according to claim 3, wherein the vertical relations are extracted with the following steps, for each node referred to as an anchor:

   - computing the volume of the 3D intersection between a potential supported 3D element and the anchor,
   - if the volume of the intersection is above a certain proportion of the volume of the supported 3D element, adding a support edge to the node of the anchor with a "contained" tag,
- if not, adding a support edge to the node of the anchor with a distance tag computed based on the distance between the bottom of the supported target and the top face of the anchor only if the 3D element bottom face center is above the bottom face of the anchor.

5. The method according to any of claims 3 or 4, wherein the horizontal relations are extracted, for each node referred to as an anchor, by tracing a series of rays starting from the anchor, and computing the intersections with other 3D furnishing objects of the 3D room.

6. The method according to any of the preceding claims, wherein step a1) comprises:

   - detecting at least a superstructure in the spatial relations graph, and applying a pruning on edges of the spatial relations graph which do not belong to a superstructure, or
   - applying a pruning on edges of the spatial relations graph which have the lowest frequencies of occurrence in a dataset of graphs extracted from a dataset of 3D furnished rooms.

7. The method according to any of the preceding claims, wherein step a2) comprises creating a zone for each 3D architectural element which has at least one 3D furnishing object in front of said 3D architectural elements, said zone comprising all 3D furnishing objects which are in front of the 3D architectural element with a proximal or adjacent edge.

8. The method according to any of the preceding claims, wherein a zone is split in several zones if its length along the 3D architectural element is above a certain threshold.

9. The method according to any of the preceding claims, wherein step a2) comprises:

   - sorting, according to the importance of the 3D furnishing object, 3D furnishing objects which have a node in the graph with at least a relation with another 3D object's node and which are not located in a zone along 3D architectural elements, the importance being defined its dimensions, its category and/or the relations the 3D furnishing object is involved in with other 3D furnishing objects;
   - creating new zones comprising the most important 3D furnishing objects.

10. The method according to any of the preceding claims, wherein step a2) comprises:

    - detecting if a 3D furnishing object is located in front of two perpendicular 3D architectural elements,
    - creating a constraint for the zone having the 3D furnishing object to be positioned in a corner of the room.

11. The method according to any of the preceding claims, wherein step a2) comprises:

    - adding a distance constraint between a zone which is located along a 3D architectural element and a zone in the middle of the room,
    - defining potential relative movements of the zone in the middle of the room with respect to the zone along the 3D architectural element so that the relation between the 3D furnishing objects of both zones is maintained in the online step.

12. The method according to any of the preceding claims, wherein step a2) comprises:

    - adding a distance constraint between two zones along a 3D Separator,
    - defining potential relative movements of both zones so that the relation between the 3D furnishing objects of both zones is maintained in the online step.

13. The method according to any of the preceding claims, wherein, in step a3), the template comprises a set of one or several zones and spatial and functional constraints between the zones and between the zones and the 3D architectural elements of the room.

14. A computer-implemented method for automatically furnishing a 3D room, comprising the steps of:

    b1) providing a virtual 3D room to be furnished, and selecting a template among the stored templates obtained with the computer-implemented method for automatically providing at least a template according to any of the preceding claims;
b2) furnishing the virtual 3D room so as to map the selected template into the 3D room to be furnished.

15. The method according to claim 14, wherein step b2) comprises the sub-steps of:

- determining all combinations of couples made by a 3D architectural element of the 3D room to furnish and a zone of the template,
- assigning all combinations as a variable of the particle of a PSO algorithm,
- running the PSO algorithm until a satisfactory solution, which satisfies the constraints, is found.

16. A computer program product comprising computer-executable instructions to cause a computer system to carry out a method according to any of the preceding claims.

17. A non-transitory computer-readable data-storage medium (MEM1, MEM2, MEM3, MEM4) containing computer-executable instructions to cause a computer system to carry out a method according to any of claims 1 to 15.

18. A computer system comprising a processor (CP) coupled to a memory (MEM1, MEM2, MEM3, MEM4), the memory storing computer-executable instructions to cause the computer system to carry out a method according to any of claims 1 to 15.

FIG 1

FIG 2

FIG 3

FIG 4

FIG 5

FIG 6

```
{
 "id": "ADB83455 ",
 "zoneRef": "wall1",
 "isOptional": False,
 "3D Objects": [
  {
   "3D Object": {
    "id": "2D7861D4",
    "catalogID": "12235",
    "width": 1400,
    "depth": 2101,
    "height": 1126,
    "optional": False,
    "position": {
    "x": -6779.16650390625,
    "y": 1126.53857421875,
    "z": 0,
    "nx": -2.4492937051703357e-16,
    "ny": 1,
    "nz": 0
    },
   },
   ...
  ],
  "replacementRules": []
 },
 ...
 ],
 "constraints": [
  {
   "id": "7AE05C9A",
   "type": "Corner",
   "constraint": {
   "zone": "ADB83455 ",
   "sideComponent": "2D7861D4",
   "side": Right,
   }
  },
  ...
 ]
 }
}
```

FIG 7

FIG 8

FIG 9

Europäisches
Patentamt

European
Patent Office

Office européen
des brevets

## EUROPEAN SEARCH REPORT

Application Number

EP 21 30 5488

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUANG SHI-SHENG ET AL: "Structure guided interior scene synthesis via graph matching", GRAPHICAL MODELS, ELSEVIER, SAN DIEGO, CA, US, vol. 85, 6 May 2016 (2016-05-06), pages 46-55, XP029580786, ISSN: 1524-0703, DOI: 10.1016/J.GMOD.2016.03.004 * abstract * * page 46 * * page 47, column 2 * * page 48 - page 55 * * figure 1 * | 1-18 | INV. G06F30/13 G06F30/18 ADD. G06F111/04 G06F111/20 |
| X | FU QIANG ET AL: "Adaptive synthesis of indoor scenes via activity-associated object relation graphs", ACM TRANSACTIONS ON GRAPHICS, ACM, NY, US, vol. 36, no. 6, 20 November 2017 (2017-11-20), pages 1-13, XP058473777, ISSN: 0730-0301, DOI: 10.1145/3130800.3130805 * abstract * * page 1 - page 2, column 1 * * page 3, column 2 - page 4, column 2 * * page 5, column 1 * * page 6 - page 13 * * figure 4 * | 1-18 | |
| | -/-- | | TECHNICAL FIELDS SEARCHED (IPC) G06F |

The present search report has been drawn up for all claims

| Place of search | Date of completion of the search | Examiner |
|---|---|---|
| Munich | 14 September 2021 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

**EUROPEAN SEARCH REPORT**

Application Number

EP 21 30 5488

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MENG YAN ET AL: "An interactive system for efficient 3D furniture arrangement", 20170627; 1077952576 - 1077952576, 27 June 2017 (2017-06-27), pages 1-6, XP058370415, DOI: 10.1145/3095140.3095169 ISBN: 978-1-4503-5228-4 * abstract * * page 2 - page 5 * * figures 1,2 * | 1-18 | |
| X,D | WANG KAI ET AL: "PlanIT", ACM TRANSACTIONS ON GRAPHICS, ACM, NY, US, vol. 38, no. 4, 12 July 2019 (2019-07-12), pages 1-15, XP058452059, ISSN: 0730-0301, DOI: 10.1145/3306346.3322941 * abstract * * page 1 * * page 3, column 1, paragraph 3 - page 12 * | 1-18 | |
| A | QI SIYUAN ET AL: "Human-Centric Indoor Scene Synthesis Using Stochastic Grammar", 2018 IEEE/CVF CONFERENCE ON COMPUTER VISION AND PATTERN RECOGNITION, IEEE, 18 June 2018 (2018-06-18), pages 5899-5908, XP033473505, DOI: 10.1109/CVPR.2018.00618 [retrieved on 2018-12-14] * abstract * * page 5899, column 2 - page 5901 * * figure 3 * | 1-18 | TECHNICAL FIELDS SEARCHED (IPC) |
| | -/-- | | |

The present search report has been drawn up for all claims

| Place of search | Date of completion of the search | Examiner |
|---|---|---|
| Munich | 14 September 2021 | Radev, Boyan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 30 5488

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WAMIQ PARA ET AL: "Generative Layout Modeling using Constraint Graphs", ARXIV.ORG, CORNELL UNIVERSITY LIBRARY, 201 OLIN LIBRARY CORNELL UNIVERSITY ITHACA, NY 14853, 26 November 2020 (2020-11-26), XP081823461, * abstract * * page 3 * | 1-18 | |
| A | RUIZHEN HU ET AL: "Graph2Plan: Learning Floorplan Generation from Layout Graphs", ARXIV.ORG, CORNELL UNIVERSITY LIBRARY, 201 OLIN LIBRARY CORNELL UNIVERSITY ITHACA, NY 14853, 28 April 2020 (2020-04-28), pages 1-14, XP081653991, DOI: 10.1145/3386569.3392391 * page 3 * * page 1 * * page 5 - page 13 * | 1-18 | |

TECHNICAL FIELDS
SEARCHED      (IPC)

The present search report has been drawn up for all claims

| Place of search | Date of completion of the search | Examiner |
|---|---|---|
| Munich | 14 September 2021 | Radev, Boyan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## REFERENCES CITED IN THE DESCRIPTION

**Patent documents cited in the description**

- CN 107240151 A

**Non-patent literature cited in the description**

- **PETER KAN et al.** Automated Interior Design Using a Genetic Algorithm. *Proceedings of VRST2017,* November 2017
- **WANG, K. et al.** PlanIT: planning and instantiating indoor scenes with relation graph and spatial prior networks. *ACM Trans. Graph.,* July 2019, vol. 38 (4
- **HE, YU et al.** *Style-compatible Object Recommendation for Multi-room Indoor Scene Synthesis,* 2003, vol. 04187, 2020